# EUROPEAN PATENT APPLICATION

(11) **EP 1 492 342 A1**
(43) Date of publication of application: **29.12.2004**
(21) Application number: 03745886.6
(22) Date of filing: 02.04.2003
(51) Int. Cl.: H04N 5/91, G11B 20/12

(54) **INFORMATION RECORDING MEDIUM AND MANUFACTURING METHOD THEREOF**

(30) Priority: 11.04.2002 JP 2002109342; 11.04.2002 JP 2002109343
(71) Applicant: KONICA MINOLTA HOLDINGS, INC., Tokyo 100-0005 (JP)
(72) Inventor: UEDA, Yutaka, c/o Konica Imaging Corporation, Hino-shi, Tokyo 191-8511 (JP)
(74) Representative: Henkel, Feiler & Hänzel
(86) International application number: PCT/JP2003/004208
(87) International publication number: WO 2003/085968

(57) **Abstract**

An information recording medium which stores image data to be displayed as a slide show on a display section, music audio data that is executed in synchronization with the slide show, and a program for enabling a computer to function as a section for executing a slide show on the display section by using images based on the image data and also playing music based on the music audio data in synchronization with the slide show; the information recording medium being able to be read by a computer, wherein plural sets of the music audio data, the image data and the program which are written in different formats so as to conform to different kinds of video audio reproducing apparatuses; or an information recording medium production method.

## Description

### TECHNICAL FIELD

The present invention relates to an information recording medium on which music audio data has been recorded so that the music audio data can be reproduced using a plurality of video audio reproducing apparatuses, which are a computer terminal such as a personal computer and a home-use video audio reproducing apparatus such as a DVD player; and the present invention also relates to its production method.

### BACKGROUND

Recently, an increasing number of customers take images by cameras and use the photos as digital image data. For example, image data which has been recorded by a digital camera and stored in information recording medium such as a memory card is read by a computer terminal such as a personal computer, and reproduced by section of image display software installed on the personal computer, and then the photo images can be browsed on the personal computer.

In addition, services for converting photos taken by a film camera into digital data are provided. Specifically, for example, when a customer brings a photographed negative film to a photo service shop such as a laboratory or a convenience store, the photo service shop processes the negative film, scans image data with a scanner, and writes the read image data on information recording medium such as a CD-R.

Furthermore, music as well as photo image has been recently used as digital data. A service for recording music audio data together with image data on the information recording medium has been provided to customers. The customer who has received the information recording medium can reproduce both image data and music audio data using a personal computer at home to enjoy a slide show with music.

However, the service is possible provided that image data and music audio data are reproduced using a computer terminal such as a personal computer. Therefore, a personal computer is necessary to execute a slide show with music or only listen to the music, and also a certain level of computer skills are required to operate a personal computer. Accordingly, even if a customer receives an information recording medium on which music audio data has been recorded, unless the customer is familiar with computer operations, he or she cannot easily enjoy music or a slide show with music.

On the other hand, home-use video audio reproducing apparatuses, such as a DVD player, have been recently available at low prices. Similar to the use of a general household apparatus, it is easy to reproduce images and sound using such a home-use video audio reproducing apparatus, and a customer who is not familiar with computer operations can easily operate the apparatus. However, such a home-use video audio reproducing apparatus cannot normally reproduce JPEG-format data which is still image data, nor can it reproduce music audio data recorded in the format for personal computer use. Therefore, a conventional information recording medium cannot be used with the home-use video audio reproducing apparatus.

Furthermore, customers reproduce music audio data in different environments. For example, if a video audio reproducing apparatus is installed at a quiet location suitable for listening to the music, music audio data with high sound quality is required. However, if the video audio reproducing apparatus is installed at a noisy location unsuitable for listening to the music, music audio data is not necessarily high sound quality. Specifically, when performance of the video audio reproducing apparatus, especially performance of the sound source or speaker, is excellent, it is preferable that music audio data have high sound quality. However, when the apparatus' performance is not so excellent, high sound quality is not necessary, and it is rather important to reduce data size.

Thus, required quality of music audio data varies depending on the installation environment and the performance of the video audio reproducing apparatus, such as a personal computer or DVD player, and customer's preference. Therefore, there is a need for the music audio data quality which can conform to such different conditions instead of the uniform data quality which has been conventionally provided. The existence of such a need has been discovered by the applicant of the present invention, and there is a requirement for such a system to provide music audio data having the sound quality that satisfies such a need.

### SUMMARY

The first embodiment was made in the light of the problem, and the first and an object of the first embodiment is to provide an information recording medium and its production method which enables photo images to be easily browsed on a computer terminal such as a personal computer and a home-use video audio reproducing apparatus such as a DVD player.

To achieve an object, an information recording medium according to a first embodiment stores image data to be displayed as a slide show on a display section and a program for enabling a computer to function as a section for executing a slide show on the display section by using images based on the image data, and the information recording medium can be read by a computer, and furthermore, the information recording medium also stores plural sets of the image data and the program which are written in different formats so as to conform to different kinds of video audio reproducing apparatuses.

In a first embodiment, the image data that belongs to the each set can be recorded in a different format.

In a first embodiment, resolution of the image data that belongs to the each set can be different.

Furthermore, in a first embodiment, moving image data created based on the image data can be recorded on the information recording medium in a format that conforms to either one of the different kinds of video audio reproducing apparatuses, and it is preferable that the moving image data be created by adding difference data which is calculated according to a predetermined slide effect to each the image data.

In a first embodiment, it is possible that music audio data is recorded on the information recording medium in different formats to conform to the different kinds of video audio reproducing apparatuses.

Furthermore, in a first embodiment, it is preferable that the different kinds of video audio reproducing apparatuses include a computer terminal and a DVD player.

An information recording medium production method according to the first embodiment has at least a step in which image data is read from a film or information recording medium provided by a customer, a step in which the read image data is converted into data written in different formats to conform to the different kinds of video audio reproducing apparatuses, and a step in which a plurality of data sets, each including the image data written in a different format to conform to each of the different kinds of video audio reproducing apparatuses and a program for enabling a computer to function as a section for executing a slide show on a display section by using images based on the image data, are recorded on an information recording medium.

Thus, according to a configuration of the first embodiment, from a film, etc. that are provided by a customer, still image data that can be reproduced on a computer terminal such as a personal computer, another still image data that can be reproduced by a home-use video audio reproducing apparatus such as a DVD player, and moving image data based on the still image data are created. And an information recording medium stores two kinds of data sets that include image data which conforms to a plurality of video audio reproducing apparatuses, a slide show program for displaying still image data as a slide show on a personal computer, an application for displaying still image data on a home-use video audio reproducing apparatus, and music audio data that can be reproduced as necessary on the video audio reproducing apparatuses. Accordingly, a customer who is not familiar with personal computer operations can enjoy photo images by reproducing image data using a home-use video audio reproducing apparatus such as a DVD player, and a customer who is familiar with personal computer operations can browse photo images by displaying image data on a personal computer using a slide show program. Thus, a customer can browse photo images according to the apparatus being used and use purpose.

Furthermore, it is possible to make resolution of still image data for a personal computer different from that of still image data for a home-use video audio reproducing apparatus. By increasing the resolution of still image data for a personal computer, it is possible for a customer to browse superfine photo images, and a customer who wants to print out superfine photo images can simply reproduce still image data on a computer terminal such as a personal computer using a slide show program. Furthermore, a customer who wants to easily browse photo images without regard for the resolution of photo image data can reproduce image data on a home-use video audio reproducing apparatus such as a DVD player. Thus, it is possible to provide photo images that conform to a customer's preference.

The first embodiment was also made in the light of a problem regarding the sound reproduction, and another object is to provide an information recording medium and its production method that can provide music audio data that can be reproduced by both a computer terminal such as a personal computer and home-use video audio reproducing apparatus such as a DVD player and can satisfy the customer's desired sound quality.

To achieve an object, an information recording medium according to the second embodiment stores image data to be displayed as a slide show on a display section, music audio data that is executed in synchronization with the slide show, and a program for enabling a computer to function as a section for executing a slide show on the display section by using images based on the image data and also playing music based on the music audio data in synchronization with the slide show, and the information recording medium can be read by a computer, and furthermore, the information recording medium also stores plural sets of the music audio data, the image data, and the program which are written in different formats so as to conform to different kinds of video audio reproducing apparatuses.

In a second embodiment, it is preferable that the music audio data that belongs to the each set be recorded in a different format.

In a second embodiment, the compression rate of the music audio data that belongs to the each set can be different.

Furthermore, in a second embodiment, moving image data created based on the image data can be recorded on the information recording medium in a format that conforms to either one of the different kinds of video audio reproducing apparatuses, and it is preferable that the moving image data be created by adding difference data which is calculated according to a predetermined slide effect to each the image data.

In a second embodiment, it is preferable that the different kinds of video audio reproducing apparatuses include a computer terminal and a DVD player.

An information recording medium production method according to the second embodiment has at least a step in which music that corresponds to the music audio data stored in a storage section is displayed so that a customer can select music, a step in which music audio data that corresponds to the music selected by the customer is converted into data written in different formats to conform to the different kinds of video audio reproducing apparatuses, a step in which image data is read from a film or information recording medium provided by a customer, a step in which the read image data is converted into data written in different formats to conform to the different kinds of video audio reproducing apparatuses, and a step in which a plurality of data sets, each including the music audio data and the image data written in a format to conform to each of the different kinds of video audio reproducing apparatuses and a program for enabling a computer to function as a section for displaying a slide show on a display section by using images based on the image data and also playing music based on the music audio data in synchronization with the slide show, are recorded on an information recording medium.

Thus, according to a configuration of the second embodiment, music selected by a customer is converted into music audio data written in formats that can be reproduced on both a computer terminal such as a personal computer and on a home-use video audio reproducing apparatus such as a DVD player. And an information recording medium stores a plurality of data sets that include music audio data and image data including still image data and moving image data which conform to a plurality of video audio reproducing apparatuses, applications for displaying still image data as a slide show. Accordingly, a customer can enjoy music and a slide show with music by using any video audio reproducing apparatuses.

Furthermore, it is possible to make compression rate of music audio data for a personal computer different from that of music audio data for a home-use video audio reproducing apparatus. By decreasing the compression rate of music audio data for a personal computer to increase sound quality, it is possible for a customer to listen to high sound quality music together with photo images on a personal computer using a slide show program. A customer who wants to easily operate and enjoy music and a slide show with music without regard for sound quality can reproduce music audio data on a DVD player using an application. Thus, it is possible for a customer to enjoy music or a slide show with music according to the customer's preference, installation environment and performance of the video audio reproducing apparatus being used and purpose of use.

### BRIEF DESCRIPTION OF THE DRAWINGS

Fig. 1 is a schematic diagram showing the configuration of an information recording medium production system according to a first embodiment of the present invention.
Fig. 2 is a block diagram of section installed at a laboratory according to a first embodiment of the present invention.
Fig. 3 is a flow chart showing the procedures for the information recording medium production method according to a first embodiment of the present invention.
Fig. 4 shows the configuration of the folders of information recording medium according to an embodiment of the present invention.
Fig. 5 shows a moving image data creation method according to the prior application.
Fig. 6 shows a moving image data creation method according to the prior application.
Fig. 7 shows a moving image data creation method according to the prior application.
Fig. 8 shows a moving image data creation method according to the prior application.
Fig. 9 shows another configuration of an information recording medium production system according to an embodiment of the present invention.
Fig. 10 shows another configuration of an information recording medium production system according to an embodiment of the present invention.
Fig. 11 is a schematic diagram showing the configuration of an information recording medium production system according to a second embodiment of the present invention.
Fig. 12 is a block diagram of section installed at a laboratory according to a second embodiment of the present invention.
Fig. 13 is a flow chart showing the procedures for an information recording medium production method according to a second embodiment of the present invention.

### DESCRIPTION OF THE PREFERRED EMBODIMENTS

In a preferred embodiment, an information recording medium according to the present invention stores two kinds of data sets which include still image data that can conform to two different kinds of video audio reproducing apparatuses which are a computer terminal such as a personal computer and a home-use video audio reproducing apparatus such as a DVD player, moving image data created based on the still image data, applications for displaying the still image data as a slide show on the video audio reproducing apparatuses, and music audio data which is reproduced during the slide show as necessary. A customer who has received the information recording medium can browse photo images, which have been recorded as image data conformable to two different kinds of video audio reproducing apparatuses, by using a computer terminal such as a personal computer and a home-use video audio reproducing apparatus such as a DVD player. Moreover, by changing the resolution of image data for each video audio reproducing apparatus, the customer can enjoy browsing photo images according to the customer's preference and the purpose of use.

### [Embodiment 1]

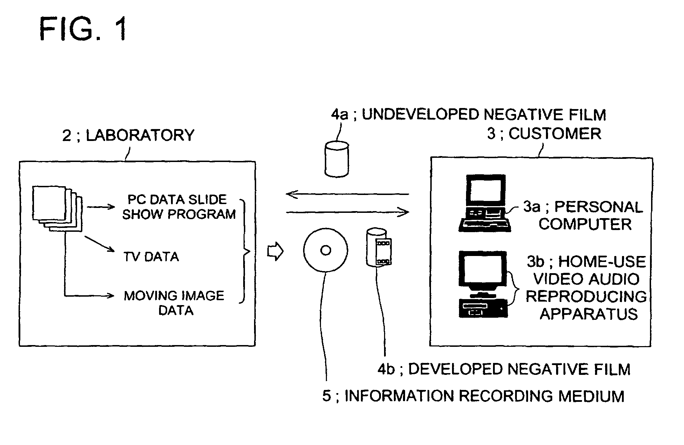

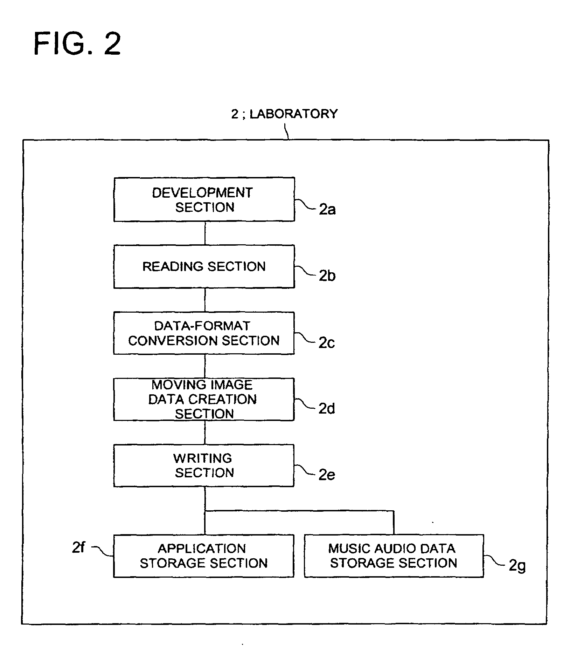

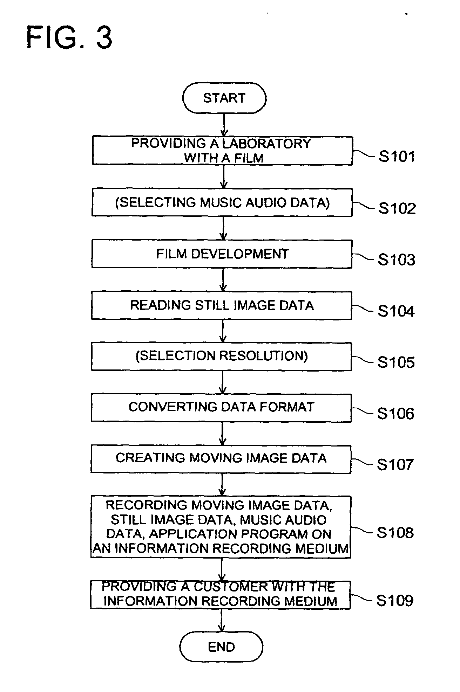

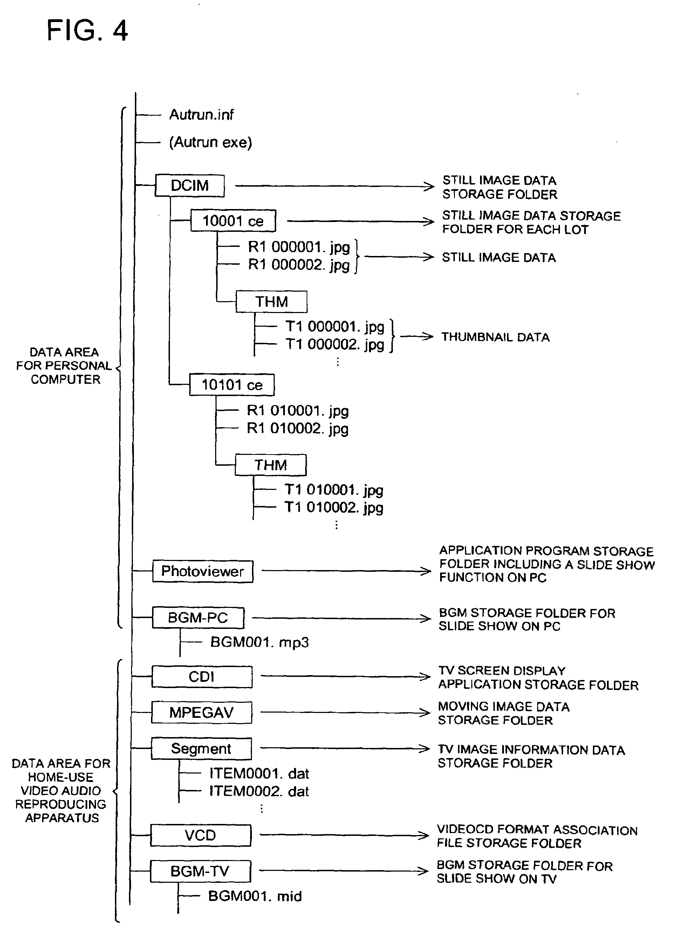

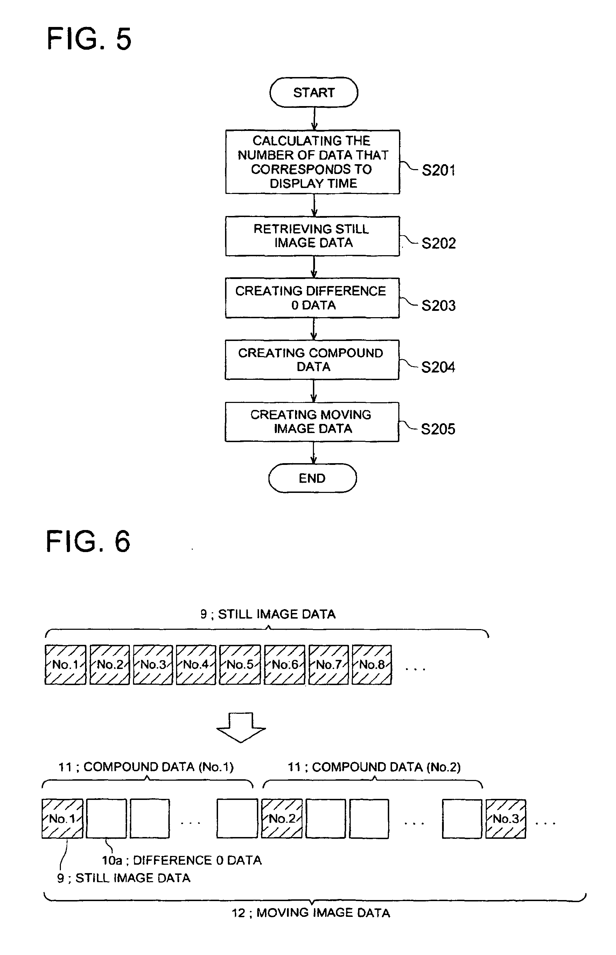

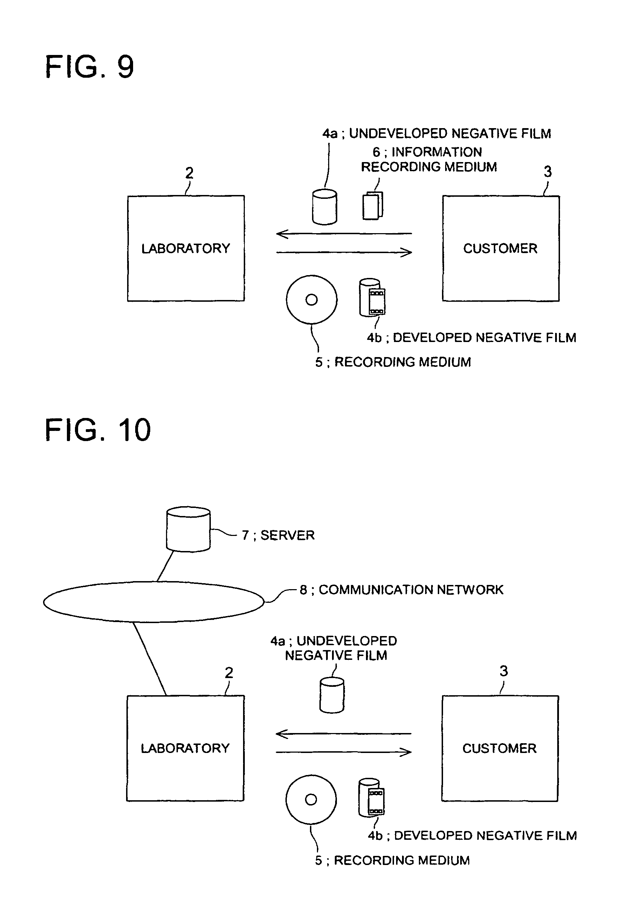

To specifically explain the embodiment of the present invention, an information recording medium and its production method according to a first embodiment of the present invention will be explained with reference to Figs. 1 through 10. Fig. 1 is a schematic diagram showing the configuration of an information recording medium production system according to a first embodiment of the present invention. Fig. 2 is a block diagram showing section installed at a photo service shop such as a laboratory which produces information recording media. Fig. 3 is a flow chart showing the procedures for an information recording medium production method according to this embodiment. Fig. 4 shows the configuration of the folders of information recording medium. Furthermore, Figs. 5 through 8 show moving image data creation procedures, and Figs. 9 and 10 show another configuration of an information recording medium production system according to this embodiment.

The "still image data" used in the description below is one piece of independent image data, which includes all pixel data or is compressed data that has eliminated redundancy, depending on the file format. For example, generally, data is written and compressed in the JPEG format to be displayed on a personal computer, and data is written in the VideoCD format or the DVD-Video format to be displayed on a home-use video audio reproducing apparatus. However, any file that is compressed in a different format or an uncompressed file can be used.

The "moving image data" is data used for switching images at constant time intervals to display those images. For example, in the MPEG file, reference image data is a piece of independent data and the image can be independently reproduced. However, other than that, the difference between the reference image and an image is recorded; therefore, the image can be reproduced only when it is compared with the reference image.

First, configuration of an information recording medium production system according to an embodiment of the present invention will be described with reference to Fig. 1. An information recording medium production system according to this embodiment consists of a customer 3 who provides photo images on an undeveloped negative film 4a and a laboratory 2 which processes the undeveloped negative film 4a, reads image data, converts the read image data into still image data that can be read by both a computer terminal such as a personal computer 3a and by a home-use video audio reproducing apparatus 3b such as a DVD player, and furthermore, creates moving image data by adding a difference file to the still image data, and then writes such data into an information recording medium 5, such as a CD-R or DVD-R, together with applications and music audio data.

Furthermore, as shown in Fig. 2, the laboratory 2 is equipped with a development section 2a for processing an undeveloped negative film 4a provided by a customer 3, a reading section 2b for reading image data from the developed film, a data-format conversion section 2c for converting the read image data into still image data written in both a format such as JPEG that can be read by a computer terminal such as a personal computer 3a and in a format such as VideoCD that can be read by a home-use video audio reproducing apparatus 3b such as a DVD player, a moving image data creation section 2d for creating moving image data based on the still image data, a writing section 2e for writing, on an information recording medium 5, still image data, moving image data, music audio data, a slide show program, and an application for the TV screen display that can be reproduced on both types of video audio reproducing apparatuses, an application storage section 2f for storing a slide show program and an application for the TV screen display, and a music audio data storage section 2g for recording music audio data.

The section can be separately configured. Or, two or more section, such as a development section 2a and a reading section 2b, a data-format conversion section 2c and a moving image data creation section 2d, a data-format conversion section 2c and moving image data creation section 2d and writing section 2e, can be integrated into one unit. If music audio data is not recorded on an information recording medium 5, the music audio data storage section 2g is not necessary. Furthermore, a printer can be provided for making normal prints based on the image data read by the reading section 2b. In this case, any printer, such as ink-jet type, electrophotography type, and silver halide photography type, can be used.

In an example below, a customer 3 requests a laboratory 2 to develop an undeveloped negative film 4a and create an information recording medium 5, however, such an order can be made at a service shop such as a convenience store. In the example, a customer 3 provides image data on an undeveloped negative film 4a, however, a developed negative film or positive film (either developed or undeveloped is allowed) can also be processed. Furthermore, as shown in Fig. 9, prints or an information recording medium 6, such as memory cards including Compact Flash (registered trademark), Smart Media, Memory Stick (registered trademark), multimedia card, SD memory card, and CD-R, on which image data acquired by a digital camera has been recorded can be used.

With reference to the flow chart in Fig. 3, an explanation will be given about procedures from when a customer 3 brings an undeveloped negative film 4a to a laboratory 2 until the customer 3 receives an information recording medium 5 on which still image data, moving image data, music audio data, and applications that can be reproduced by a plurality of video audio reproducing apparatuses have been written by using the information recording medium production system.

First, in step S101, a customer 3 brings an undeveloped negative film 4a taken by a film camera to a photo service shop such as a laboratory 2 and requests the development of the undeveloped negative film 4a and creation of information recording medium 5. Photo images recorded on the undeveloped negative film 4a can be taken by the customer or any other customer. Furthermore, the image data is not limited to photo images taken by a camera, but image data acquired via a communication network such as the Internet and image data that has been processed by a customer using image processing software can be used.

Subsequently, the laboratory 2 that received the order starts the development process. At this point, if music audio data also needs to be recorded on the information recording medium 5 so that music can be played at the time still image data is executed as a slide show on a personal computer 3a or a home-use video audio reproducing apparatus 3b, in step S102, the laboratory 2 shows the customer 3 the list of music audio data stored in the music audio data storage section 2g, and the customer 3 selects preferred music audio data from the list. If music audio data is not recorded on the information recording medium 5, this step can be eliminated. Furthermore, alternative configurations are possible in which a laboratory 2 can individually specify music audio data, or a customer 3 can select music audio data on a music audio data selection terminal installed in the laboratory 2.

In step S103, the laboratory 2 develops the undeveloped negative film 4a by using a development section 2a, and reads data from the developed negative film by section of a reading section 2b such as a scanner to acquire image data in step S104. After that, in step S105, the laboratory 2 selects the necessary resolution of still image data (described later), and in step S106, by section of a data-format conversion section 2c, the laboratory 2 converts the read image data into two kinds of data: one written in the format (e.g. JPEG, BMP, GIF, etc.) that can be read by a computer terminal such as a personal computer 3a and the other written in the format (e.g. VideoCD format, etc.) that can be read by a home-use video audio reproducing apparatus such as a DVD player 3b.

If an appropriate data format is different due to the model of the customer's home-use video audio reproducing apparatus 3b, it is possible for the laboratory 2 to ask the customer 3 about the model of the home-use video audio reproducing apparatus 3b in advance, and the laboratory 2 can convert the read image data into data written in the format that conforms to the customer's apparatus. Furthermore, it is also possible for a customer 3 to select a format in which still image data will be written on information recording medium 5 so that a personal computer 3a will be able to execute the image data.

Resolution of the still image data can be arbitrarily specified. However, it is possible that when a customer 3 desires superfine photo images, high resolution (e.g. approx.1,024 x 1,536) data is provided and when a customer 3 desires small-size image data, low resolution (e.g. approx.350 x 256) data is provided. Furthermore, it is also possible that resolution of still image data for a personal computer 3a is different from that of still image data for a home-use video audio reproducing apparatus 3b. For example, resolution of still image data for a personal computer 3a can be high so that images can be processed on the computer, and resolution of still image data for a home-use video audio reproducing apparatus 3b can be low so that images can be simply displayed. Moreover, thumbnail data can be simultaneously created in the format that can be read by a personal computer 3a so that the thumbnail data can be displayed when image data is selected for a slide show.

If a customer 3 provides image data in a developed negative film or on an information recording medium 6, the development process in step S103 can be eliminated. If a customer 3 provides image data on information recording medium 6, image data can be read directly from the information recording medium 6 in step S104.

Next, in step S107, a moving image data creation section 2d creates moving image data based on the still image data read by the reading section 2b. Any moving image data created based on the still image data is available. For example, moving image data can be created by adding difference data for creating a predetermined slide effect to the still image data. The format in which the moving image data is written can be any format, including MPEG1, MPEG2, etc., that can be recognized by a home-use video audio reproducing apparatus 3b. In an alternate configuration, it is possible for a customer 3 to select the format in which moving image data will be written on information recording medium 5.

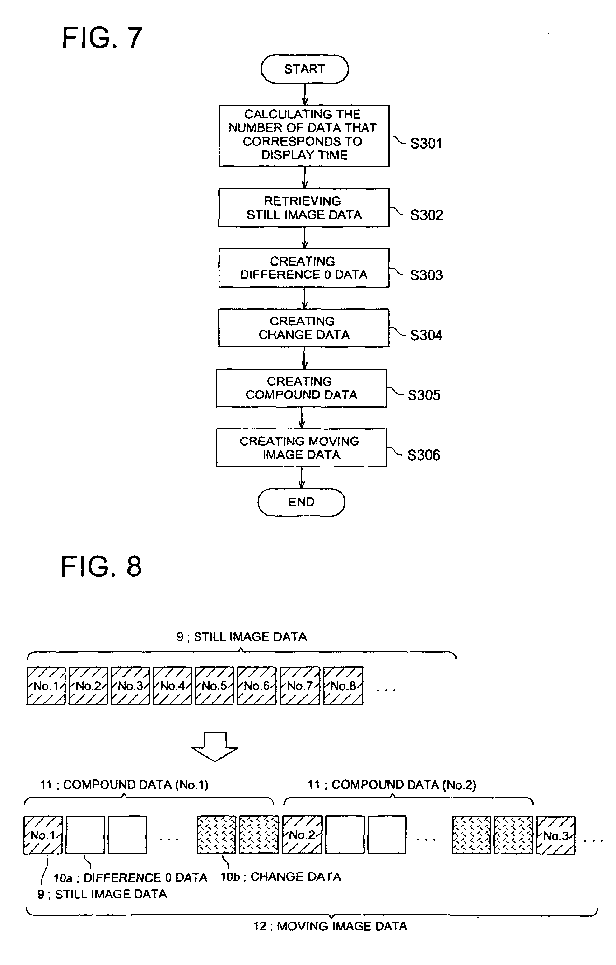

An appropriate method for creating moving image data by adding difference data to the still image data is described in the prior application (Patent Application No.2002-51916) of the applicant of the present invention. The moving image data creation method described in the prior application will be overviewed with reference to Figs. 5 through 8. Figs. 5 and 6 are schematic diagrams of a first form of the moving image data creation method in which pieces of still image data switch at predetermined time intervals. Figs. 7 and 8 are schematic diagrams of a second form of the moving image data creation method in which pieces of still image data gradually switch according to the predetermined slide effect.

In the first form, as shown in Figs. 5 and 6, the moving image data creation section 2d executes step (S201) in which the quantity of image data to be displayed within the prescribed time is calculated according to the predetermined period of time a piece of still image data is displayed to produce a slide effect, step (S202) in which plural pieces of still image data 9 read by the reading section 2b are sequentially retrieved, step (S203) in which difference data (i.e. since the difference to display the same image is "0", hereafter, referred to as "difference 0 data 10a") for the quantity is created, step (S204) in which compound data 11 is created by adding difference 0 data 10a to the retrieved still image data 9, and step (S205) in which moving image data 12 is created by combining pieces of the compound data 11.

That is, the moving image data creation method does not simply combine pieces of still image data 9, but first creates compound data 11 consisting of still image data 9 and difference 0 data 10a by adding a certain quantity of difference 0 data 10a, which has been calculated according to the display time, to each piece of still image data 9 and then combines such pieces of compound data 11. By applying such processing, it is possible to create moving image data 12 which has the same display effect as still image data 9 displayed as a slide show.

In a second form of the moving image data creation method, as shown in Figs. 7 and 8, the moving image data creation section 2d executes step (S301) in which the quantity of image data to be displayed within the prescribed time is calculated according to the predetermined period of time a piece of still image data is displayed to produce a slide effect, step (S302) in which plural pieces of still image data 9 read by the reading section 2b are sequentially retrieved, step (S303) in which a certain quantity of difference 0 data 10a necessary for displaying the same image is created among the quantity of data, step (S304) in which a certain quantity of difference data necessary for displaying screen switch effects (hereafter, referred to as "change data 10b") is created among the quantity of data, step (S305) in which compound data 11 is created by adding the created difference 0 data 10a and change data 10b to the retrieved still image data 9, and step (S306) in which moving image data 12 is created by combining pieces of compound data 11. The use of such a method makes it possible to easily create effective moving image data 12 from still image data 9.

Then, in step S108, two kinds of still image data: one for a personal computer 3a and the other for a home-use video audio reproducing apparatus 3b which has been created by the data-format conversion section 2c, moving image data created by the moving image data creation section 2d, applications for executing slide display on different video audio reproducing apparatuses, and music audio data written in different formats to conform to different kinds of video audio reproducing apparatuses are written on an information recording medium 5 by section of a writing section 2e so that a computer can read the data. As stated above, a medium such as a CD-R, DVD-R that can reproduce data on a home-use video audio reproducing apparatus 3b can be used as an information recording medium 5.

Moreover, during the writing procedure, it is preferable that moving image data be first written and then, still image data, music audio data and applications for slide display be written so that moving image data can be reproduced on a home-use video audio reproducing apparatus such as a DVD player 3b. Furthermore, if a slide show program has already been installed on the personal computer 3a of a customer 3, the procedure for writing a slide show program can be eliminated. It is also possible for the customer 3 to determine whether to write a slide show program on an information recording medium 5.

An information recording medium 5 on which data and programs have been written in the procedures has such a folder configuration as shown in Fig. 4. That is, the information recording medium 5 consists of a data area for a personal computer (from Autrun.inf to BGM_PC) which is used for reproducing image data on a personal computer 3a and a data area for a home-use video audio reproducing apparatus (from CDI to BGM_TV) which is used for reproducing image data on a home-use video audio reproducing apparatus such as a DVD player 3b. The data area for a personal computer includes an information file (Autrun.inf) and/or execution file (Autrun.exe) for a personal computer 3a to recognize and automatically reproduce data recorded on an information recording medium 5, a still image data storage folder (DCIM), an application program storage folder (Photoviewer) for storing a slide show program, and a folder (BGM_PC) for storing music audio data to be reproduced as BGM for a slide show. The data area for a home-use video audio reproducing apparatus includes a folder (CDI) for storing an application for displaying still image data on the TV screen, a folder (MPEGAV) for storing moving image data created by the moving image data creation section 3d, a folder (Segment) for storing image information data to be displayed on the TV screen, a folder (VCD) for storing a file for associating image information data with the VideoCD format data, and a folder (BGM_TV) for storing music audio data to be reproduced as BGM for a slide show.

Furthermore, the still image data storage folder located in the data area for a personal computer has a still image data storage folder (10001ce, 10101ce, etc.) for each lot, and each folder contains thumbnail data (T1000001.jpg, etc.) which corresponds to still image data (R2000001.jpg, etc.). The slide show BGM storage folder contains music audio data (BGM001.mp3, etc.) that can be reproduced on a personal computer 3a. Furthermore, the TV slide show BGM storage folder located in the data area for a home-use video audio reproducing apparatus contains music audio data (BGM001.mid, etc.) that can be reproduced on a home-use video audio reproducing apparatus 3b.

Moreover, it is possible to create a VideoCD disk by writing moving image data in the MPEG1 format using a CD-R as an information recording medium 5. It is also possible to create a DVD-Video disk by writing moving image data in the MPEG2 format using a DVD-R as information recording medium 5, and the moving image data can be reproduced on a general DVD player.

Fig. 4 shows a sample configuration, and it is sufficient if at least there are included: still image data and a slide show program so as to display image data on a personal computer 3a, and TV image information data, a VideoCD format association file and an application for the TV screen display so as to display image data on a home-use video audio reproducing apparatus 3b. Furthermore, in addition to the data and program shown in Fig. 4, it is also possible to include a program for displaying an electronic album on a personal computer 3a, a program for acquiring music audio data, and a program for outputting a set of data and program.

Subsequently, in step S109, the laboratory 2 provides the information recording medium 5 and returns the developed negative film 4b to the customer 3, and the customer 3 is then able to browse photo images at home by using a computer terminal such as a personal computer 3a or a home-use video audio reproducing apparatus 3b such as a DVD player.

An appropriate slide show program used for executing an information recording medium 5 on a personal computer 3a is a program disclosed in the prior application (Patent Application No.2002-13789) by the inventor of this application. In this program, still image data and music audio data are not independently displayed/played, but are displayed/played in association with each other. As a result, a customer 3 can enjoy the slide show in which still image data and music audio data are simultaneously reproduced.

Specifically, the slide show program enables a computer to function as a music audio data analysis section for calculating the play time of the music audio data, deriving the music tempo, music phrase, audio data, and music pause, and setting the timing for displaying the still image data as well as to function as an image data analysis section for retrieving specific shape and color from the still image data, and selecting music audio data suitable for image data by referring to the characteristics of the still image data.

Then, for example, it is possible to calculate the play time of music audio data from the music audio data format or size and header information, divide the play time by the number of still image data to be displayed, and calculate display time per piece of still image data so that the still image data display will stop at the same time when the music audio data stops playing. Or, it is also possible to make settings for the slide show so that the still image data display will stop at the same time when plural pieces of music audio data stop playing.

Furthermore, it is possible to derive the music's tempo from the intensity and frequency of the music audio data, so that a specific slide effect time (e.g. fade-in/fade-out time) can be generated in accordance with the music's tempo, thereby increasing the pace at which slides are displayed when the music tempo is fast and decreasing the pace at which slides are displayed ― slides are displayed for longer time in intervals than above ― when the music tempo is slow.

It is also possible to derive audio data and music pause from the intensity and frequency of the music audio data, divide the music into phrases, and set the slide show so that a piece of still image data can be displayed for one phrase. Furthermore, it is also possible to synchronize the phrase of the music audio data with the display of the still image data, thereby integrating music with images, enhancing the effect of the slide show.

Thus, by using information recording medium production system according to this embodiment, all that a customer 3 does is to simply bring an undeveloped negative film 4a to a laboratory 2. Then, the laboratory 2 reads image data from the film, creates moving image data based on two kinds of still image data ― one conforms to a personal computer 3a and the other conforms to a home-use video audio reproducing apparatus 3b ― and predetermined slide effect, and then the laboratory 2 writes, on an information recording medium 5 in the format that can be read by a computer, two different kinds of data sets which include still image data that can be reproduced by two different kinds of video audio reproducing apparatuses, moving image data, necessary music audio data and slide display applications. Accordingly, the customer 3 can enjoy browsing photo images on both the home-use video audio reproducing apparatus 3b and personal computer 3a.

Upon creation of still image data that conforms to each video audio reproducing apparatus, it is possible to make the still image data resolution of a personal computer 3a different from that of a home-use video audio reproducing apparatus 3b. For example, making the still image data resolution high for a personal computer 3a is beneficial to a customer who processes still image data on the personal computer 3a. Accordingly, it is possible to provide an information recording medium 5 suitable for both the above mentioned customers and customers who simply display still image data.

Moreover, in the explanation, the laboratory 2 incorporates a section 2g for storing music audio data; however, as Fig. 10 shows, the laboratory 2 can be connected, via a communication network 8, to a server 7 which provides music audio data delivery services. This configuration eliminates music audio data storage and eliminates updating of data on the laboratory 2 side and enables the laboratory 2 to provide latest music audio data for customers 3.

Furthermore, in the explanation, two different data sets, each of which includes still image data and an application, are recorded on an information recording medium 5. However, the present invention is not considered to be limited to the embodiment, but three or more data sets can be recorded in order to conform to three or more different kinds of video audio reproducing apparatuses.

### [Embodiment 2]

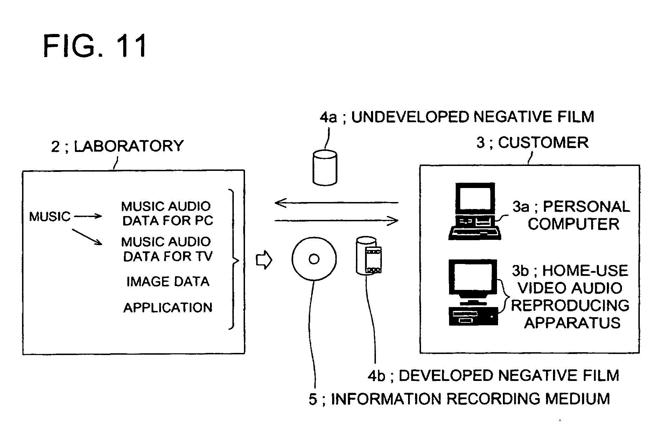

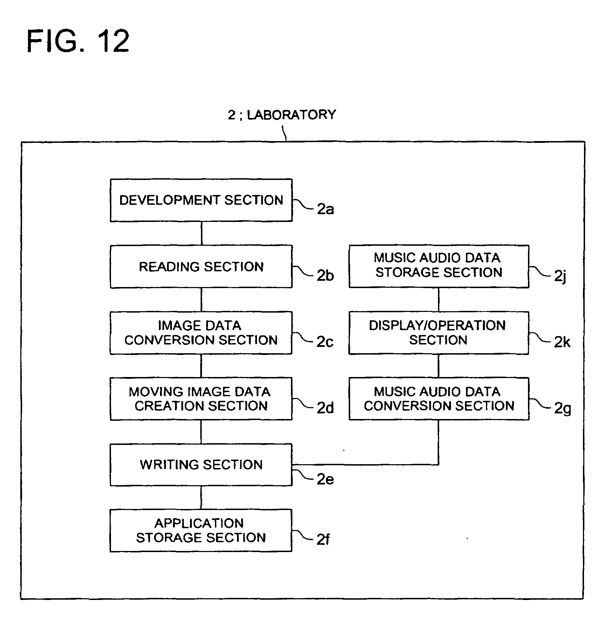

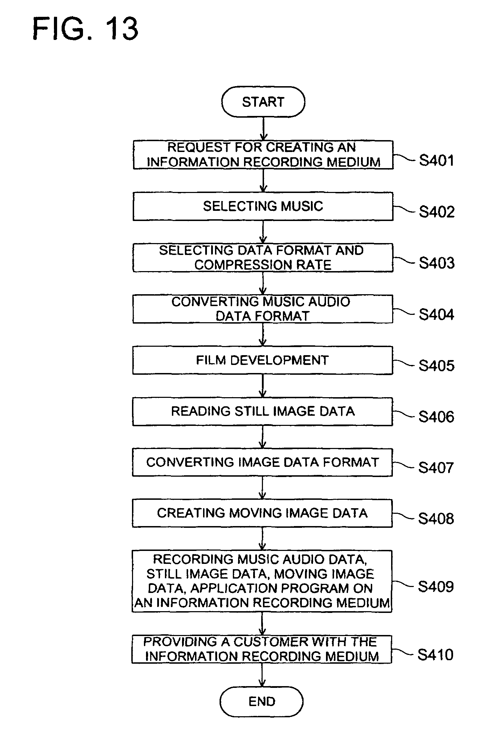

To specifically explain the embodiment of the present invention, an information recording medium and its production method according to a second embodiment of the present invention will be explained with reference to Figs. 11 through 13. Fig. 11 is a schematic diagram showing the configuration of an information recording medium production system according to a second embodiment of the present invention. Fig. 12 is a block diagram showing section installed at a photo service shop such as a laboratory which produces information recording media. Fig. 13 is a flow chart showing the procedures for an information recording medium production method according to this embodiment. Other portions are the same as shown in Figs. 4 through 10 and described in a first embodiment.

As stated above, in a second embodiment, music audio data is recorded on an information recording medium in two kinds of formats: one for a computer terminal such as a personal computer and the other for a home-use video audio reproducing apparatus such as a DVD player. It is sufficient that music audio data is recorded on information recording medium in an appropriate format that conforms to each video audio reproducing apparatus. However, this embodiment produces most prominent effect when a slide show is executed by displaying image data, which has been created from an undeveloped photo film provided by a customer, together with music audio data. Therefore, an explanation will be given below about a case where two kinds of data sets, each of which includes music audio data, image data and an application, so that one data set conforms to a computer terminal such as a personal computer and the other data set conforms to a home-use video audio reproducing apparatus such as a DVD player.

The "music audio data" used in the explanation below is not considered to be limited to a piece of music that consists of music and voice, but only music or voice can be used, and it does not have to be complete music. The music audio data can be written in an uncompressed audio data file, such as a wav file, or can be written in a compressed audio data file with redundancy eliminated, such as an mp3 file, etc., or can be written in a file compressed in other formats.

First, configuration of an information recording medium production system according to a second embodiment of the present invention will be explained with reference to Fig. 11. An information recording medium production system according to this embodiment consists of a customer 3 who provides photo images on an undeveloped negative film 4a and a laboratory 2 which converts photo images in the undeveloped negative film 4a provided by the customer 3 and music selected by the customer 3 into data written in two kinds of formats, one for a computer terminal such as a personal computer 3a and the other for a home-use video audio reproducing apparatus such as a DVD player 3b, and writes the data together with applications and moving image data on an information recording medium 5 such as a CD-R or DVD-R.

As Fig. 12 shows, the laboratory 2 has a development section 2a for developing an undeveloped negative film 4a provided by a customer 3, a reading section 2b for reading image data from the developed film, an image data conversion section 2c for converting the read image data into still image data written in two kinds of formats: JPEG that can be read by a computer terminal such as a personal computer 3a and VideoCD that can be read by a home-use video audio reproducing apparatus such as a DVD player, a moving image data creation section 2d for creating moving image data based on the still image data, a music audio data storage section 2j for recording music audio data, a display/operation section 2k for displaying music names that correspond to the stored music audio data and enabling a customer 3 to select music, a music audio data conversion section 2g for converting music audio data that corresponds to the selected music into data written in two kinds of formats: the mp3 format that can be read by a personal computer 3a and the mid format that can be read by a DVD player, a writing section 2e for writing, on an information recording medium 5, music audio data, still image data, moving image data, a slide show program, and an application for the TV screen display so that such data can be reproduced on each video audio reproducing apparatus, and an application storage section 2f for storing the slide show program and the application for the TV screen display.

The section can be separately configured. Furthermore, two or more section, such as a development section 2a and a reading section 2b, a music audio data conversion section 2g and an image data conversion section 2c, a music audio data conversion section 2g and an image data conversion section 2c and a moving image data creation section 2d, can be integrated into one unit. Furthermore, a printer can be provided for making normal prints based on the image data read by the reading section 2b. In this case, any printer, such as ink-jet type, electrophotography type, and silver halide photography type, can be used.

In an example below, a customer 3 requests a laboratory 2 to create an information recording medium 5 on which plural sets of data that can be reproduced on a plurality of video audio reproducing apparatuses; however, such an order can be made at a service shop such as a convenience store. Furthermore, in the example, a customer 3 selects music at the laboratory 2; however, as Fig. 9 shows, it is possible for a customer 3 to provide the laboratory 2 with information recording medium 6 on which music audio data the customer 3 has acquired via a communication network such as the Internet or from a music CD.

Furthermore, an explanation will be made about a case where a customer 3 provides image data on an undeveloped negative film 4a; however, a developed negative film or positive film (either developed or undeveloped is allowed) can be processed. It is also possible to record image data taken by a digital camera or acquired via a communication network such as the Internet on an information recording medium 6 shown in Fig. 9.

With reference to the flow chart in Fig. 13, an explanation will be given about procedures, by using the information recording medium production system, from when a customer 3 brings an undeveloped negative film 4a to a laboratory 2 until the customer 3 receives an information recording medium 5 on which plural data sets which include music audio data, still image data, moving image data and applications that can be reproduced by a plurality of video audio reproducing apparatuses have been recorded.

First, in step S401, a customer 3 brings an undeveloped negative film 4a taken by a film camera to a photo service shop such as a laboratory 2 and requests the development of the undeveloped negative film 4a and creation of information recording medium 5. Photo images recorded on the undeveloped negative film 4a can be taken by the customer or any other customer. Furthermore, the image data is not limited to photo images taken by a camera, but image data acquired via a communication network such as the Internet and image data that has been processed by a customer using image processing software can be used.

Next, in step S402, the laboratory 2 shows the customer 3 the list of music names which correspond to music audio data stored in the music audio data storage section 2j, and the customer 3 selects preferred music audio data from the list. As an alternative display and selection method, it is possible for a sales person at the laboratory 2 to show the music name list to the customer 3 and for the customer 3 to select the preferred music from the list. Furthermore, alternative configurations are possible in which the laboratory 2 is equipped with a dedicated music audio data selection terminal that integrates a music audio data storage section 2j, display/operation section 2k, music audio data conversion section 2g, and writing section 2e into one unit, and a customer 3 selects music on the terminal.

After the music has been selected, music audio data that corresponds to the music is converted into a format that can be reproduced by a plurality of video audio reproducing apparatuses. At that point, the laboratory 2 can convert the music audio data into a predetermined data format. If an appropriate data format is different due to the model of the customer's home-use video audio reproducing apparatus 3b, it is possible for the laboratory 2 to ask the customer 3 about the model of the home-use video audio reproducing apparatus 3b in advance, and the laboratory 2 can convert the music audio data into data written in the format that conforms to the customer's apparatus. In that case, the customer 3 selects a data format by section of a display/operation section 2k in step S403.

The music audio data can be written in an uncompressed data format (e.g. wav format), and also can be written in a compressed data format (e.g. mp3 or mid format) at a predetermined compression rate so as to write a large volume of information on information recording medium 5. In that case, the compression rate is determined by the data format. For example, when a customer 3 desires high-quality sound data, the compression rate should be low (e.g. a 55-MB wav file is compressed to a 5.3-MB file), and when a customer 3 desires small-size data, the compression rate should be high (e.g. a 55-MB wav file is compressed to a 3.5-MB file). It is preferable that the customer 3 be able to select a compression rate in step S403.

Then, in step S404, by section of a music audio data conversion section 2g, the selected music audio data is converted into two kinds of music audio data, one written in a format (e.g. mp3, etc.) that can be read by a computer terminal such as a personal computer 3a and the other written in a format (e.g. wav, mid, etc.) that can be read by a home-use video audio reproducing apparatus 3b such as a DVD player.

Next, in step S405, the laboratory 2 develops the undeveloped negative film 4a by using a development section 2a, and reads data from the developed negative film, developed in step S406, by section of a reading section 2b such as a scanner to acquire image data. After that, in step S407, the laboratory 2 converts the read image data into two kinds of data, one written in the format (e.g. JPEG, BMP, GIF, etc.) that can be read by a computer terminal such as a personal computer 3a and the other written in the format (e.g. VideoCD format, etc.) that can be read by a home-use video audio reproducing apparatus 3b such as a DVD player. At that point, an alternative configuration is possible in which a customer 3 can select an image data format or specify the resolution of the image data.

For example, it is possible that when a customer 3 desires superfine photo images, high resolution (e.g. approx.1,024 x 1,536) data is provided, and when a customer 3 desires small-size image data, low resolution (e.g. approx.350 x 256) data is provided. Furthermore, it is also possible that resolution of still image data for a personal computer 3a is different from that of still image data for a home-use video audio reproducing apparatus 3b. For example, resolution of still image data for a personal computer 3a can be high so that images can be processed on the computer, and resolution of still image data for a home-use video audio reproducing apparatus 3b can be low so that images can be simply displayed. Moreover, thumbnail data can be simultaneously created in the format that can be read by a personal computer 3a so that the thumbnail data can be displayed when image data is selected for a slide show.

If a customer 3 provides image data in a developed negative film or on an information recording medium 6, the development process in step S405 can be eliminated. Furthermore, if a customer 3 provides image data on information recording medium 6, image data can be read directly from the information recording medium 6 in step S406.

Next, when a moving image data is recorded on an information recording medium 5, in step S408, a moving image data creation section 2d creates moving image data based on the still image data read by the reading section 2b. Any moving image data created based on the still image data is available. For example, moving image data can be created by adding difference data for creating a predetermined slide effect to the still image data. The format in which the moving image data is written can be any format, including MPEG1, MPEG2, etc., that can be recognized by a home-use video audio reproducing apparatus 3b. In an alternate configuration, it is possible for a customer 3 to select the format in which moving image data will be written on an information recording medium 5.

In step S409, two kinds of music audio data ― one for a personal computer 3a and the other for a home-use video audio reproducing apparatus 3b ― which has been created by the music audio data conversion section 2g, two kinds of still image data ― one for a personal computer 3a and the other for a home-use video audio reproducing apparatus 3b ― created by the image data conversion section 2c, moving image data created by the moving image data creation section 2d, and applications for executing slide display on different video audio reproducing apparatuses are written as two data sets on an information recording medium 5 by section of a writing section 2e so that a computer can read the data. As stated above, a medium such as a CD-R, DVD-R that can reproduce data on a home-use video audio reproducing apparatus 3b can be used as an information recording medium 5.

Subsequently, in step S410, the laboratory 2 provides the information recording medium 5 and returns the developed negative film 4b to the customer 3, and the customer 3 is then able to enjoy music and a slide show with music by using a computer terminal such as a personal computer 3a or a home-use video audio reproducing apparatus 3b such as a DVD player.

Thus, by using an information recording medium production system according to this embodiment, the configuration, which has been explained in the first embodiment with reference to Fig. 9, allows a customer 3 to simply select music. Then, the laboratory 2 creates music audio data as well as image data displayed with music that is written in two kinds of formats, one that conforms to a personal computer 3a and the other that conforms to a home-use video audio reproducing apparatus 3b, and then the laboratory 2 writes two kinds of data sets which include music audio data, still image data, moving image data, and slide display applications into an information recording medium 5. As a result, the customer 3 can enjoy music and a slide show with music on both the home-use video audio reproducing apparatus 3b and the personal computer 3a.

Upon creation of music audio data that conforms to each video audio reproducing apparatus, by changing a compression rate of the music audio data for a personal computer 3a and for a home-use video audio reproducing apparatus 3b, it is possible to provide an information recording medium 5 which satisfies both the customer who desires high-quality music audio data and the customer who desires small-size and easy-to-reproduce music audio data rather than the high sound quality.

Moreover, in the explanation, the laboratory 2 incorporates a section 2g for storing music audio data; however, as Fig. 10 shows, the laboratory 2 can be connected, via a communication network 8, to a server 7 which provides music audio data delivery services. This configuration eliminates music audio data storage and eliminates updating of data on the laboratory 2 side and enables the laboratory 2 to provide latest music audio data for customers 3.

Furthermore, in the explanation, two different data sets, each of which includes still image data and an application, are recorded on an information recording medium 5. However, a second embodiment is not considered to be limited to the embodiment, and three or more data sets can be recorded in order to conform to three or more different kinds of video audio reproducing apparatuses.

As stated above, an information recording medium and the information recording medium production method according to a first embodiment have prominent effects as described below:

The first effect of the first embodiment is that all that a customer has to do is to provide a film taken by a film camera or an information recording medium on which image data taken by a digital camera has been recorded, and the customer can obtain an information recording medium that can be reproduced both by a home-use video audio reproducing apparatus such as a DVD player and by a computer terminal such as a personal computer.

The above is possible because a photo service shop such as a laboratory that conducts film development is equipped with a section for converting image data read from a film into still image data that conforms to both a personal computer and a home-use video audio reproducing apparatus and a section for creating moving image data based on the still image data, and in addition to such image data, applications and association files for executing slide display on plural apparatuses are recorded on an information recording medium, and the customer receives the medium.

The second effect of the first embodiment is to provide an information recording medium that can satisfy both the customer who wants to browse superfine photo images or to process photo images and the customer who wants to easily browse photo images.

The above is possible because upon conversion of read image data into still image data that conforms to both a personal computer and a home-use video audio reproducing apparatus, the resolution of still image data for each apparatus can be flexibly changed according to the customer's preference; for example, by increasing the resolution of still image data for a personal computer.

In embodiments different from the preferred first embodiment, an information recording medium according to the present invention makes it possible to play music or view a slide show with music on both a personal computer and a DVD player by using music audio data written in an appropriate format that conforms to each video audio reproducing apparatus. Furthermore, by changing the compression rate of music audio data for each video audio reproducing apparatus, it is possible for a customer to enjoy music with the desired sound quality and the apparatus being used.

Furthermore, an information recording medium and the information recording medium production method according to a second embodiment have prominent effects as described below:

The first effect of the second embodiment is that all that a customer has to do is to select music, and the customer can obtain an information recording medium on which music audio data has been recorded that can be reproduced both by a home-use video audio reproducing apparatus such as a DVD player and by a computer terminal such as a personal computer.

The above is possible because a photo service shop such as a laboratory that conducts film development is equipped with a section for converting music selected by the customer into music audio data written in formats that conform to both a personal computer and a home-use video audio reproducing apparatus, and in addition to the music audio data, image data displayed with the music, applications and association files for executing slide display on plural apparatuses are recorded on an information recording medium, and the customer receives the medium.

The second effect of the second embodiment is to provide information recording medium that can satisfy both the customer who wants to enjoy high sound quality music and the customer who wants to easily play music.

The above is possible because upon conversion of selected music into music audio data that conforms to a personal computer and a home-use video audio reproducing apparatus, it is possible to change the compression rate of music audio data for each video audio reproducing apparatus according to the installation environment and performance of each video audio reproducing apparatus, for example, by decreasing the compression rate of the still image data for a personal computer and making sound quality high, thereby making it possible to specify a compression rate according to the customer's preference.

## Claims

1. An information recording medium in which a computer readable, comprising:
an image data displayed for a slide show on a display section;
a program for enabling a computer to function as a slide show section to display a slide show based on the image data on the display section;
wherein a recording format of each of plural different sets of the image data and the program corresponds to one of the different kinds of video audio reproducing apparatuses.

2. The information recording of claim 1, wherein a recording format of the image data that belongs to each of the plural sets of the image data and program is a different recording format.

3. The information recording medium of claim 1, wherein a resolution of the image data that belongs to each of the plural sets of the image data and program is a different resolution.

4. The information recording medium of claim 1, further comprising:
a moving image data generated based on the image data,
wherein a recording format of the moving image data corresponds to either one of the different kinds of video audio reproducing apparatuses.

5. The information recording medium of claim 4, wherein the moving image data generated by the image data and a difference data calculated according to an predetermined slide effect to each the image data.

6. The information recording medium of claim 1, further comprising:
a music audio data of format corresponds to one of the different kinds of video audio reproducing apparatuses.

7. The information recording medium of claim 1, wherein the different kinds of video audio reproducing apparatuses includes a computer terminal and a DVD player.

8. An information recording medium production method comprising steps of:
reading an image data from a film or information recording medium provided by a customer;
converting the read image data into data of formats to corresponds to the different kinds of video audio reproducing apparatuses; and
recording plural sets of the image data and the program on information recording medium, wherein the image data stored in a format to corresponds to one of the different kinds of video audio reproducing apparatuses, and the program for enabling a computer to function as a slide show section to display a slide show based on the image data on a display section.

9. The information recording medium production method of claim 8, wherein the conversion step converts a recording format of the image data that belongs to each of the plural sets of the image data and program into different recording format.

10. The information recording medium production method of claim 8, wherein the conversion step converts a resolution of the image data that belongs to each of the plural sets of the image data and program into different resolution.

11. The information recording medium production method of claim 8, further comprising step of:
generating a moving image data based on the image data,
wherein the recording step records the moving image data as format corresponds to either one of the different kinds of video audio reproducing apparatuses.

12. The information recording medium production method of claim 11, wherein the moving image data generating step generates the moving image data and a difference data calculated according to an predetermined slide effect to each the image data.

13. The information recording medium production method of claim 8, wherein the recording step records a music audio data of format corresponds to one of the different kinds of video audio reproducing apparatuses on the information recording medium.

14. The information recording medium production method of claim 8, wherein the different kinds of video audio reproducing apparatuses includes a computer terminal and a DVD player.

15. An information recording medium in which a computer readable, comprising:
an image data displayed for a slide show on a display section;
a music audio data for playing music in synchronization with the slide show; and
a program for enabling a computer to function as a slide show section to display a slide show based on the image data, and as a playing music section to play music based on the music audio data in synchronization with the slide show;
wherein a recording format of each of plural different sets of the image data the music audio data and the program corresponds to one of the different kinds of video audio reproducing apparatuses.

16. The information recording medium of claim 15, wherein a recording format of the music audio data that belongs to each of the plural sets of the image data and program is a different recording format.

17. The information recording medium of claim 15, wherein a compression rate of the music audio data that belongs to each of the plural sets of the image data and program is a different resolution.

18. The information recording medium of claim 15, further comprising:
a moving image data generated based on the image data,
wherein a recording format of the moving image data is format corresponds to either one of the different kinds of video audio reproducing apparatuses.

19. The information recording medium of claim 18, wherein the moving image data generated by the image data and a difference data calculated according to an predetermined slide effect to each the image data.

20. The information recording medium of claim 15, wherein the different kinds of video audio reproducing apparatuses include a computer terminal and a DVD player.

21. An information recording medium production method comprising steps of:
displaying music selection image corresponds to a music audio data stored in a storage section so that a customer selectable music;
converting the music audio data that corresponds to the music selected by the customer into data of formats to corresponds to the different kinds of video audio reproducing apparatuses;
reading an image data from a film or information recording medium provided by a customer;
converting the read image data into data of formats to corresponds to the different kinds of video audio reproducing apparatuses; and
recording plural sets of the image data, the music audio data and the program on information recording medium,
wherein the image data and the music audio data stored in a format to corresponds to one of the different kinds of video audio reproducing apparatuses, and the program for enabling a computer to function as a slide show section to display a slide show based on the image data, and as a playing music section to play music based on the music audio data in synchronization with the slide show.

22. The information recording medium production method of claim 21, wherein the conversion step converts a recording format of the image data that belongs to each of the plural sets of the image data and program into different recording format.

23. The information recording medium production method of claim 21, wherein the conversion step compresses the music audio data that belongs to each of the plural sets of the image data and program at different compression rates.

24. The information recording medium production method of claim 21, further comprising step of:
generating a moving image data based on the image data,
wherein the recording step records the moving image data as format corresponds to either one of the different kinds of video audio reproducing apparatuses.

25. The information recording medium production method of claim 24, wherein the moving image data generating step generates the moving image data and a difference data calculated according to an predetermined slide effect to each the image data.

26. The information recording medium production method of claim 21, wherein the different kinds of video audio reproducing apparatuses includes a computer terminal and a DVD player.
